# EUROPEAN PATENT APPLICATION

(11) **EP 4 823 126 A1**
(43) Date of publication of application: **14.10.2026**
(21) Application number: 25751336.6
(22) Date of filing: 24.01.2025
(51) Int. Cl.: H04W 4/02

(54) **POSITIONING METHOD, AND DEVICE**

(30) Priority: 05.02.2024 CN 202410166311
(71) Applicant: Honor Device Co., Ltd., Shenzhen, Guangdong 518040 (CN)
(72) Inventor: TANG, Xiaoxuan, Shenzhen, Guangdong 518040 (CN)
(74) Representative: Isarpatent
(86) International application number: PCT/CN2025/074654
(87) International publication number: WO 2025/167734

(57) **Abstract**

Embodiments of this application provide a positioning method and a device, and relate to the field of communication technologies. The method includes: receiving a first message sent by a first node; and receiving a reference signal or sending a reference signal based on the first message, where the reference signal is used to determine location information of the to-be-located device. In this way, location of the to-be-located device can be triggered.

## Description

This application claims priority to Chinese Patent Application No. 202410166311.9, filed with the China National Intellectual Property Administration on February 5, 2024 and entitled "POSITIONING METHOD AND DEVICE", which is incorporated herein by reference in its entirety.

### TECHNICAL FIELD

This application relates to technical fields such as communication, and in particular, to a positioning method and a device.

### BACKGROUND

In an artificial intelligence of things (Artificial Intelligence of Things, AIoT) communication system, a related device usually needs to be located.

Currently, due to relatively narrow communication bandwidth and a relatively weak measurement capability of the related device in the AIOT communication system and a relatively long distance between a positioning device (configured to locate the related device) and the related device, the related device cannot be located by using an existing positioning technology and procedure.

Therefore, how to complete location of the related device in the AIOT communication system becomes an urgent technical problem to be resolved.

### SUMMARY

Embodiments of this application provide a positioning method and a device, which are applied to technical fields such as communication, to trigger location of a related device in an AIOT communication system.

According to a first aspect, an embodiment of this application provides a positioning method, applied to a to-be-located device. The method includes:
receiving a first message sent by a first node; and
receiving a reference signal or sending a reference signal based on the first message, where the reference signal is used to determine location information of the to-be-located device.

In this embodiment of this application, the to-be-located device receives the first message sent by the first node; and receives a reference signal or sends a reference signal based on the first message, where the reference signal is used to determine the location information of the to-be-located device. In this way, location of the to-be-located device can be triggered in an AIOT communication system, thereby resolving the technical problem in the conventional technology.

In a possible implementation, the first message includes one or more of the following:
a first positioning indication, used to indicate to receive a reference signal or send a reference signal;
a first identifier, used to indicate the to-be-located device;
a positioning procedure identifier;
positioning configuration information, including a time domain-related configuration and a reference signal receiving resource or a reference signal sending resource;
a second identifier, used to indicate a positioning assistance device; and
signal strength information, including at least one reference signal strength and/or at least one reference signal strength level.

In addition, in this embodiment, considering that it is difficult for the positioning assistance device and the to-be-located device to establish a direct communication link, it may be identified, by using a positioning procedure index, whether a message is related to the positioning assistance device and the to-be-located device, thereby reducing signaling overheads.

In a possible implementation, the receiving a reference signal includes:
receiving, when a first condition is met, a reference signal sent by the positioning assistance device.

The first condition includes one or more of the following:
the first identifier is the same as an identifier of the to-be-located device;
the first positioning indication is used to indicate to receive a reference signal; and
the positioning configuration information includes the reference signal receiving resource.

In a possible implementation, the reference signal includes one or more of the following:
an identifier of the positioning assistance device that sends the reference signal;
location information of the positioning assistance device; and
a positioning procedure identifier.

In addition, in this embodiment, considering that it is difficult for the positioning assistance device and the to-be-located device to establish a direct communication link, it may be identified, by using a positioning procedure index, whether a reference signal is related to the positioning assistance device and the to-be-located device, thereby reducing signaling overheads.

In a possible implementation, the method further includes:
measuring the reference signal when a second condition is met, to obtain strength information of the reference signal.

The second condition includes one or more of the following:
the second identifier is the same as the identifier of the positioning assistance device; and
the positioning procedure identifier in the first message is the same as the positioning procedure identifier in the reference signal.

In a possible implementation, the method further includes:
determining the location information of the to-be-located device based on the strength information of the reference signal and the location information of the positioning assistance device.

In a possible implementation, the method further includes:
sending alarm information to the first node when the location information of the to-be-located device is different from first preset location information of the to-be-located device, where the alarm information includes the location information of the to-be-located device and/or the identifier of the to-be-located device.

In a possible implementation, the method further includes:
sending signal measurement information of the reference signal to the first node.

The signal measurement information includes one or more of the following:
the strength information of the reference signal; and
the identifier of the positioning assistance device.

In a possible implementation, the sending a reference signal includes:
sending a reference signal to the positioning assistance device when a third condition is met.

The third condition includes one or more of the following:
the first identifier is the same as an identifier of the to-be-located device;
the first positioning indication is used to indicate to send a reference signal; and
the positioning configuration information includes the reference signal sending resource.

In a possible implementation, the reference signal includes one or more of the following:
the identifier of the to-be-located device; and
a positioning procedure identifier.

According to a second aspect, an embodiment of this application provides a positioning method, applied to a first node. The method includes:
sending a first message to a to-be-located device, and sending a second message to a positioning assistance device.

In a possible implementation, the second message includes one or more of the following:
a second positioning indication, used to indicate to receive a reference signal or send a reference signal;
a first identifier, used to indicate the to-be-located device;
a positioning procedure identifier;
positioning configuration information, including a time domain-related configuration and a reference signal receiving resource or a reference signal sending resource;
a second identifier, used to indicate the positioning assistance device; and
signal strength information, including at least one reference signal strength and/or at least one reference signal strength level.

In a possible implementation, the method further includes:
receiving alarm information sent by the to-be-located device, where the alarm information includes location information of the to-be-located device and/or an identifier of the to-be-located device.

In a possible implementation, the alarm information is used to trigger re-location of the to-be-located device.

In a possible implementation, the method further includes:
receiving signal measurement information sent by the to-be-located device.

The signal measurement information includes one or more of the following:
strength information of a reference signal, where the reference signal is a reference signal sent by the positioning assistance device; and
an identifier of the positioning assistance device.

In a possible implementation, the method further includes:
receiving signal measurement information sent by the positioning assistance device, and determining location information of the to-be-located device based on the signal measurement information.

The signal measurement information includes one or more of the following:
strength information of a reference signal, where the reference signal is a reference signal sent by the to-be-located device;
an identifier of the to-be-located device; and
an identifier of the positioning assistance device.

According to a third aspect, an embodiment of this application provides a positioning method, applied to a positioning assistance device. The method includes:
receiving a second message sent by a first node; and
receiving a reference signal or sending a reference signal based on the second message, where the reference signal is used to determine location information of a to-be-located device.

In a possible implementation, the second message includes one or more of the following:
a second positioning indication, used to indicate to receive a reference signal or send a reference signal;
a first identifier, used to indicate the to-be-located device;
a positioning procedure identifier;
positioning configuration information, including a time domain-related configuration and a reference signal receiving resource or a reference signal sending resource;
a second identifier, used to indicate the positioning assistance device; and
signal strength information, including at least one signal strength and/or at least one signal strength level of a reference signal.

In a possible implementation, the sending a reference signal includes:
sending a reference signal to the to-be-located device when a fourth condition is met.

The fourth condition includes one or more of the following:
the second identifier is the same as an identifier of the positioning assistance device;
the second positioning indication is used to indicate to send a reference signal; and
the positioning configuration information includes the reference signal sending resource.

In a possible implementation, the reference signal includes one or more of the following:
the identifier of the positioning assistance device;
location information of the positioning assistance device; and
a positioning procedure identifier.

In a possible implementation, the receiving a reference signal includes:
receiving, when a fifth condition is met, a reference signal sent by the to-be-located device.

The fifth condition includes one or more of the following:
the second identifier is the same as an identifier of the positioning assistance device;
the second positioning indication is used to indicate to receive a reference signal; and
the positioning configuration information includes the reference signal receiving resource.

In a possible implementation, the reference signal includes one or more of the following:
an identifier of the to-be-located device; and
a positioning procedure identifier.

In a possible implementation, the method further includes:
measuring the reference signal when a sixth condition is met, to obtain signal measurement information of the reference signal, and sending the signal measurement information to the first node.

The sixth condition includes one or more of the following:
the first identifier is the same as the identifier of the to-be-located device; and
the positioning procedure identifier in the second message is the same as the positioning procedure identifier in the reference signal.

The signal measurement information includes one or more of the following:
strength information of the reference signal;
the identifier of the to-be-located device; and
the identifier of the positioning assistance device.

According to a fourth aspect, an embodiment of this application provides a communication apparatus, applied to a to-be-located device. The apparatus includes:
a receiving module, configured to receive a first message sent by a first node.

The receiving module is further configured to receive a reference signal based on the first message. Alternatively, a sending module is configured to send a reference signal. The reference signal is used to determine location information of the to-be-located device.

In a possible implementation, the first message includes one or more of the following:
a first positioning indication, used to indicate to receive a reference signal or send a reference signal;
a first identifier, used to indicate the to-be-located device;
a positioning procedure identifier;
positioning configuration information, including a time domain-related configuration and a reference signal receiving resource or a reference signal sending resource;
a second identifier, used to indicate a positioning assistance device; and
signal strength information, including at least one reference signal strength and/or at least one reference signal strength level.

In a possible implementation, the receiving module is specifically configured to:
receive, when a first condition is met, a reference signal sent by the positioning assistance device.

The first condition includes one or more of the following:
the first identifier is the same as an identifier of the to-be-located device;
the first positioning indication is used to indicate to receive a reference signal; and
the positioning configuration information includes the reference signal receiving resource.

In a possible implementation, the reference signal includes one or more of the following:
an identifier of the positioning assistance device that sends the reference signal;
location information of the positioning assistance device; and
a positioning procedure identifier.

In a possible implementation, the communication apparatus further includes:
a processing module, configured to measure the reference signal when a second condition is met, to obtain strength information of the reference signal.

The second condition includes one or more of the following:
the second identifier is the same as the identifier of the positioning assistance device; and
the positioning procedure identifier in the first message is the same as the positioning procedure identifier in the reference signal.

In a possible implementation, the processing module is further configured to:
determine the location information of the to-be-located device based on the strength information of the reference signal and the location information of the positioning assistance device.

In a possible implementation, the sending module is further configured to:
send alarm information to the first node when the location information of the to-be-located device is different from first preset location information of the to-be-located device, where the alarm information includes the location information of the to-be-located device and/or the identifier of the to-be-located device.

In a possible implementation, the sending module is further configured to:
send signal measurement information of the reference signal to the first node.

The signal measurement information includes one or more of the following:
the strength information of the reference signal; and
the identifier of the positioning assistance device.

In a possible implementation, the sending module is further configured to:
send a reference signal to the positioning assistance device when a third condition is met.

The third condition includes one or more of the following:
the first identifier is the same as an identifier of the to-be-located device;
the first positioning indication is used to indicate to send a reference signal; and
the positioning configuration information includes the reference signal sending resource.

In a possible implementation, the reference signal includes one or more of the following:
the identifier of the to-be-located device; and
a positioning procedure identifier.

According to a fifth aspect, an embodiment of this application provides a communication apparatus, applied to a first node. The apparatus includes:
a sending module, configured to: send a first message to a to-be-located device, and send a second message to a positioning assistance device.

In a possible implementation, the second message includes one or more of the following:
a second positioning indication, used to indicate to receive a reference signal or send a reference signal;
a first identifier, used to indicate the to-be-located device;
a positioning procedure identifier;
positioning configuration information, including a time domain-related configuration and a reference signal receiving resource or a reference signal sending resource;
a second identifier, used to indicate the positioning assistance device; and
signal strength information, including at least one reference signal strength and/or at least one reference signal strength level.

In a possible implementation, the communication apparatus further includes:
a receiving module, configured to receive alarm information sent by the to-be-located device, where the alarm information includes location information of the to-be-located device and/or an identifier of the to-be-located device.

In a possible implementation, the alarm information is used to trigger re-location of the to-be-located device.

In a possible implementation, the receiving module is further configured to:
receive signal measurement information sent by the to-be-located device.

The signal measurement information includes one or more of the following:
strength information of a reference signal, where the reference signal is a reference signal sent by the positioning assistance device; and
an identifier of the positioning assistance device.

In a possible implementation, the method further includes a processing module.

The receiving module is further configured to receive signal measurement information sent by the positioning assistance device.

The processing module is configured to determine location information of the to-be-located device based on the signal measurement information.

The signal measurement information includes one or more of the following:
strength information of a reference signal, where the reference signal is a reference signal sent by the to-be-located device;
an identifier of the to-be-located device; and
an identifier of the positioning assistance device.

According to a sixth aspect, an embodiment of this application provides a communication apparatus, applied to a positioning assistance device. The apparatus includes:
a receiving module, configured to receive a second message sent by a first node.

The receiving module is further configured to receive a reference signal based on the second message. Alternatively, a sending module is configured to send a reference signal based on the second message. The reference signal is used to determine location information of a to-be-located device.

In a possible implementation, the second message includes one or more of the following:
a second positioning indication, used to indicate to receive a reference signal or send a reference signal;
a first identifier, used to indicate the to-be-located device;
a positioning procedure identifier;
positioning configuration information, including a time domain-related configuration and a reference signal receiving resource or a reference signal sending resource;
a second identifier, used to indicate the positioning assistance device; and
signal strength information, including at least one signal strength and/or at least one signal strength level of a reference signal.

In a possible implementation, the sending module is specifically configured to:
send a reference signal to the to-be-located device when a fourth condition is met.

The fourth condition includes one or more of the following:
the second identifier is the same as an identifier of the positioning assistance device;
the second positioning indication is used to indicate to send a reference signal; and
the positioning configuration information includes the reference signal sending resource.

In a possible implementation, the reference signal includes one or more of the following:
the identifier of the positioning assistance device;
location information of the positioning assistance device; and
a positioning procedure identifier.

In a possible implementation, the receiving module is specifically configured to:
receive, when a fifth condition is met, a reference signal sent by the to-be-located device.

The fifth condition includes one or more of the following:
the second identifier is the same as an identifier of the positioning assistance device;
the second positioning indication is used to indicate to receive a reference signal; and
the positioning configuration information includes the reference signal receiving resource.

In a possible implementation, the reference signal includes one or more of the following:
an identifier of the to-be-located device; and
a positioning procedure identifier.

In a possible implementation, the communication apparatus further includes:
a processing module, configured to measure the reference signal when a sixth condition is met, to obtain signal measurement information of the reference signal.

The sending module is further configured to send the signal measurement information to the first node.

The sixth condition includes one or more of the following:
the first identifier is the same as the identifier of the to-be-located device; and
the positioning procedure identifier in the second message is the same as the positioning procedure identifier in the reference signal.

The signal measurement information includes one or more of the following:
strength information of the reference signal;
the identifier of the to-be-located device; and
the identifier of the positioning assistance device.

According to a seventh aspect, an embodiment of this application provides an electronic device, including a processor and a storage. The storage is configured to store code instructions. The processor is configured to run the code instructions, to perform the method described in any one of the first aspect and the possible implementations corresponding to the first aspect, the method described in any one of the second aspect and the possible implementations corresponding to the second aspect, and the method described in any one of the third aspect and the possible implementations corresponding to the third aspect.

According to an eighth aspect, an embodiment of this application provides a computer-readable storage medium. The computer-readable storage medium stores a computer program or instructions. When the computer program or the instructions are run on a computer, the computer is enabled to perform the method described in any one of the first aspect and the possible implementations corresponding to the first aspect, the method described in any one of the second aspect and the possible implementations corresponding to the second aspect, and the method described in any one of the third aspect and the possible implementations corresponding to the third aspect.

According to a ninth aspect, an embodiment of this application provides a computer program product including a computer program. When the computer program is run on a computer, the computer is enabled to perform the method described in any one of the first aspect and the possible implementations corresponding to the first aspect, the method described in any one of the second aspect and the possible implementations corresponding to the second aspect, and the method described in any one of the third aspect and the possible implementations corresponding to the third aspect.

According to a tenth aspect, this application provides a chip or a chip system. The chip or the chip system includes at least one processor and a communication interface. The communication interface and the at least one processor are interconnected through a line. The at least one processor is configured to run a computer program or instructions, to perform the method described in any one of the first aspect and the possible implementations corresponding to the first aspect, the method described in any one of the second aspect and the possible implementations corresponding to the second aspect, and the method described in any one of the third aspect and the possible implementations corresponding to the third aspect. The communication interface in the chip may be an input/output interface, a pin, a circuit, or the like.

In a possible implementation, the chip or the chip system described above in this application further includes at least one storage, and the at least one storage stores instructions. The storage may be a storage unit, for example, a register or a cache, inside the chip, or may be a storage unit (for example, a read-only memory or a random access memory) of the chip.

It should be understood that technical solutions of the second aspect to the tenth aspect of this application correspond to those of the first aspect of this application, and beneficial effects achieved in these aspects and corresponding feasible implementations are similar to those of the first aspect. Details are not described.

### BRIEF DESCRIPTION OF DRAWINGS

FIG. 1 is a schematic diagram of an application scenario according to an embodiment of this application;
FIG. 2 is a schematic flowchart 1 of a positioning method according to an embodiment of this application;
FIG. 3 is a schematic flowchart 2 of a positioning method according to an embodiment of this application;
FIG. 4 is a schematic flowchart 3 of a positioning method according to an embodiment of this application;
FIG. 5 is a schematic flowchart of receiving and sending a reference signal according to an embodiment of this application;
FIG. 6 is a schematic flowchart 4 of a positioning method according to an embodiment of this application;
FIG. 7 is a schematic diagram 1 of a structure of a communication apparatus according to an embodiment of this application;
FIG. 8 is a schematic diagram 2 of a structure of a communication apparatus according to an embodiment of this application;
FIG. 9 is a schematic diagram 3 of a structure of a communication apparatus according to an embodiment of this application; and
FIG. 10 is a schematic diagram of a structure of an electronic device according to an embodiment of this application.

### DESCRIPTION OF EMBODIMENTS

To clearly describe technical solutions in embodiments of this application, the following briefly describes some terms and technologies in the embodiments of this application.

### 1. AIoT

AIoT is intended to provide a low-power, low-complexity, and low-cost internet of things solution. In a standard 3rd generation partnership project (third generation partnership project, 3GPP) system, AIoT is a standard with a lower capability than a narrowband internet of things (narrow band internet of things, NB-IoT). In a non-3GPP system, a market of AIoT is targeted at a market requirement for radio frequency identification (radio frequency identification, RFID), providing comparable and more advantageous technical solutions.

AIoT is required to address scenarios not covered by a current 3GPP technology, for example, scenarios in the following three cases:
(1) extreme environmental conditions, for example, high pressure, an extremely high/low temperature, and a humid environment;
(2) scenarios with a strong requirement for one or more of ultra-low complexity, a very small device size/shape factor (for example, a millimeter-level thickness), maintenance-free operation (for example, no need to replace a conventional battery of a device), a longer lifecycle, and the like; and
(3) apparatus scenarios to which driving by a conventional battery is inapplicable.

AIoT is also an internet of things service, with an objective of providing an AIoT device with functions such as low power consumption, low complexity, a very small size, and a longer lifecycle. The AIoT device is powered through energy harvesting, and may be battery-free or have a limited energy storage capacity (that is, using a capacitor). The AIoT device may communicate with another device without a conventional power source and/or avoid human intervention in charging or replacement.

Usually, an internet of things device that supports environmental power does not have a conventional battery. The device uses energy obtained from a radio wave or any other form of energy that can be obtained in a particular use case. For example, in some scenarios, the AIoT device may obtain energy from a radio wave. The radio wave may come from a 5G NR network entity or a terminal device. In some other scenarios, the internet of things device that supports environmental power may obtain energy from solar energy, light, motion/vibration, heat, pressure, or energy from any other power source.

AIoT devices may be classified into the following three types:
Type 1: This type of AIoT device has no energy storage capability and no independent signal generation/amplification, and may use backscatter transmission.
Type 2: This type of AIoT device has an energy storage capability but has no independent signal generation, and may participate in backscatter transmission. Stored energy may be used to amplify a backscattered signal.
Type 3: This type of AIoT device has an energy storage capability and independent signal generation.

### 2. Inventory

Inventory may be a process in which a second device identifies a first device to obtain an identity (identity, ID) of the first device. This process may be applied to a plurality of scenarios, for example, logistics management or warehouse management. In particular, in scenarios with a large quantity of terminal devices, this process can save significant manpower and material resources and implement fast and accurate inventory counting.

### 3. RFID technology

The RFID technology is a contactless automatic identification technology. Contactless bidirectional data communication may be performed between a network device and a terminal device in a radio frequency manner. The network device (for example, a reader (reader)) may perform reading from or perform writing into the terminal device (for example, a tag (tag)) in the radio frequency manner, to implement target identification and data exchange.

### 4. Other terms

In the embodiments of this application, the word such as "example" or "for example" is used to represent giving an example, an illustration, or a description. Any embodiment or design solution described as an "example" or "for example" in this application should not be construed as being preferred or advantageous over another embodiment or design solution. Exactly, use of the word such as "example" or "for example" is intended to present a related concept in a specific manner.

In the embodiments of this application, "at least one" means one or more, and "a plurality of" means two or more. The term "and/or" describes an association relationship between associated objects and represents that three relationships may exist. For example, A and/or B may represent that only A exists, both A and B exist, and only B exists, where A and B may be singular or plural. The character "/" usually indicates an "or" relationship between associated objects. "At least one of the following" or a similar expression thereof means any combination of these items, including a single item or any combination of a plurality of items. For example, at least one of a, b, or c may represent a, b, c, a and b, a and c, b and c, or a, b, and c, where a, b, and c may be singular or plural.

In the embodiments of this application, words such as "first" and "second" are used to distinguish between same items or similar items with basically same functions and effects. For example, a first chip and a second chip are merely used to distinguish between different chips, and are not intended to limit a sequence of the first chip and the second chip. A person skilled in the art may understand that the words such as "first" and "second" do not limit a quantity or an execution sequence, and the words such as "first" and "second" do not indicate a definite difference.

It should be noted that in the embodiments of this application, "when...", "in a case...", "if...", or the like may be an instantaneous occurrence time of a case, or may be a period of time after occurrence of a case. This is not specifically limited in the embodiments of this application. In addition, a display interface provided in the embodiments of this application is merely an example, and the display interface may further include more or less content.

It should be noted that in the embodiments of this application, the word such as "example" or "for example" is used to represent giving an example, an illustration, or a description. Any embodiment or design solution described as an "example" or "for example" in this application should not be construed as being preferred or advantageous over another embodiment or design solution. Exactly, use of the word such as "example" or "for example" is intended to present a related concept in a specific manner.

Currently, due to relatively narrow communication bandwidth of a related device in an AIOT communication system and a relatively long distance between a positioning device (configured to locate the related device) and the related device, the related device cannot be located by using an existing positioning technology and procedure. Therefore, how to trigger location of the related device in the AIOT communication system becomes an urgent technical problem to be resolved.

To locate a device in the AIOT communication system, this application provides a positioning method. In the method, a to-be-located device receives a first message sent by a first node; and receives or sends a reference signal based on the first message. Location information of a positioning device may be determined based on the reference signal.

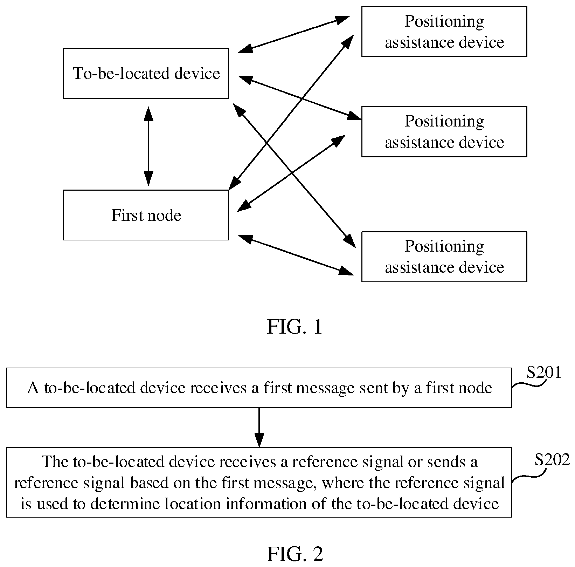

An application scenario of the positioning method provided in this application is first described with reference to FIG. 1.

FIG. 1 is a schematic diagram of an application scenario according to an embodiment of this application. As shown in FIG. 1, a first node, a to-be-located device, and a plurality of positioning assistance devices are included. The first node, the to-be-located device, and the plurality of positioning assistance devices may communicate. In descriptions of FIG. 1, a quantity of the plurality of positioning assistance devices is 3.

The first node in this embodiment of this application may be a reader, a read apparatus, a scanner, a read head, a communicator, or a reader/writer. Alternatively, the first node may be an access network (radio access network, RAN) device in a mobile communication system. The RAN device is mainly responsible for radio resource management on an air interface side, QoS management, data compression and encryption, and the like, for example, a base station NodeB, an evolved NodeB eNodeB, a base station in a 5G mobile communication system or a new radio (new radio, NR) communication system, a base station in a future mobile communication system, a macro base station, a micro base station, a picocell, a femtocell, or the like. Alternatively, the first node may be an intermediate node. The intermediate node is located between the first node and the access network device, and the intermediate node may be a relay, an integrated access and backhaul (integrated access and backhaul, IAB) node, UE, repeater, or the like.

The to-be-located device and the plurality of positioning assistance devices in this embodiment of this application may be tags (TAG) or terminals.

The tag may be an electronic tag, a smart tag, a radio frequency tag, a transponder, a data carrier, or the like, and usually includes a coupling element and a chip. Each tag may have a unique electronic code. In some scenarios, the tag may be attached to an object to identify the object.

The terminal may be a handheld device, a vehicle-mounted device, a wearable device, a terminal in an internet of things system (for example, an AIOT communication system), or the like.

The handheld device is, for example, a mobile phone (mobile phone), a tablet computer, a palmtop computer, a notebook computer, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a terminal device in a 5G network or a terminal device in a future evolved public land mobile network (public land mobile network, PLMN), or the like.

The wearable device may also be referred to as a wearable intelligent device, and is a generic term for wearable devices that are intelligently designed and developed for daily wear by using a wearable technology, for example, glasses, gloves, watches, clothes, and shoes. The wearable device is a portable device that is directly worn on a human body or integrated into clothing or an accessory of a user. The wearable device is not only a hardware device, but also implements a powerful function through software support, data exchange, and cloud interaction. In a broad sense, the wearable intelligent device includes a full-featured and large-sized device that can implement all or some functions without depending on a smartphone, for example, a smartwatch or smart glasses, and includes a device that provides only one type of application function and that needs to be used in combination with another device such as a smartphone, for example, various smart bands or various pieces of smart jewelry for monitoring physical signs.

In this embodiment of this application, the related device may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems, for example, a Linux operating system, a Unix operating system, an Android operating system, an iOS operating system, or a windows operating system, that implement service processing by using a process (process). The application layer includes applications such as Browser, Contacts, word processing software, and instant messaging software.

The first node may indicate the to-be-located device to send a reference signal or receive a reference signal. The to-be-located device sends a reference signal, and the assistance device receives the reference signal. Alternatively, the to-be-located device receives a reference signal, and the assistance device sends the reference signal. The reference signal is used to determine location information of the to-be-located device.

When the to-be-located device sends a reference signal, the first node may determine the location information of the to-be-located device.

When the positioning assistance device sends a reference signal, the to-be-located device may determine the location information of the to-be-located device.

It should be noted that in FIG. 1, the positioning assistance device may also be a to-be-located device, and the to-be-located device may also be a positioning assistance device.

The following describes, by using specific embodiments, in detail the technical solutions shown in this application. It should be noted that the following several embodiments may exist alone or may be combined with each other. In descriptions of the following embodiments, a quantity of positioning assistance devices is 1. Same or similar content, for example, explanations and descriptions of terms or nouns and explanations and descriptions of steps, may be mutually referenced in different embodiments. No repeated descriptions are provided.

FIG. 2 is a schematic flowchart 1 of a positioning method according to an embodiment of this application. As shown in FIG. 2, the positioning method includes the following steps.

S201: A to-be-located device receives a first message sent by a first node.

Optionally, before S201, the to-be-located device sends a location request to the first node. Further, the first node sends the first message to the to-be-located device based on the location request.

Optionally, the location request may include an identifier of the to-be-located device and a positioning indication. The positioning indication is used to request to locate the to-be-located device.

Optionally, the location request may be a predefined sequence or a specific bit (for example, a predefined location is set to 1) in control signaling, or may be represented by using a specific field (for example, similar to RRC, where the request is represented by using a predefined value of the specific field) in control signaling.

S202: The to-be-located device receives a reference signal or sends a reference signal based on the first message, where the reference signal is used to determine location information of the to-be-located device.

When the to-be-located device sends a reference signal, a positioning assistance device receives the reference signal, measures the reference signal, to obtain signal measurement information, and determines the location information of the to-be-located device through the first node based on the signal measurement information.

When the positioning assistance device sends a reference signal, the to-be-located device may determine the location information of the to-be-located device based on the reference signal.

In this embodiment of this application, the to-be-located device receives the first message sent by the first node; and receives a reference signal or sends a reference signal based on the first message, where the reference signal is used to determine the location information of the to-be-located device. In this way, location of the to-be-located device can be triggered in an AIOT communication system, thereby resolving the foregoing urgent technical problem to be resolved.

In this embodiment of this application, the first node sends the first message to the to-be-located device, and sends a second message to the positioning assistance device. The positioning assistance device may receive a reference signal or send a reference signal based on the second message.

For example, the to-be-located device sends a reference signal based on the first message, and the positioning assistance device receives a reference signal based on the second message. Alternatively, the to-be-located device receives a reference signal based on the first message, and the positioning assistance device sends a reference signal based on the second message.

In this embodiment of this application, the first message includes one or more of the following:
a first positioning indication, used to indicate to receive a reference signal or send a reference signal;
a first identifier, used to indicate the to-be-located device;
a positioning procedure identifier;
positioning configuration information, including a time domain-related configuration and a reference signal receiving resource or a reference signal sending resource;
a second identifier, used to indicate the positioning assistance device;
an identifier list in which the second identifier is located; and
signal strength information, including at least one reference signal strength and/or at least one reference signal strength level.

When the first positioning indication is used to indicate to receive a reference signal, the positioning configuration information includes the reference signal receiving resource. When the first positioning indication is used to indicate to send a reference signal, the positioning configuration information includes the reference signal sending resource.

In this embodiment of this application, the second message includes one or more of the following:
a second positioning indication, used to indicate to receive a reference signal or send a reference signal;
a first identifier, used to indicate the to-be-located device;
a positioning procedure identifier;
positioning configuration information, including a time domain-related configuration and a reference signal receiving resource or a reference signal sending resource;
a second identifier, used to indicate the positioning assistance device; and
signal strength information, including at least one reference signal strength and/or at least one reference signal strength level.

When the second positioning indication is used to indicate to receive a reference signal, the positioning configuration information includes the reference signal receiving resource. When the second positioning indication is used to indicate to send a reference signal, the positioning configuration information includes the reference signal sending resource.

The first positioning indication and the second positioning indication are different.

Optionally, both the first message and the second message may be broadcast messages.

When both the first message and the second message are broadcast messages, the first node may broadcast and send the first message and the second message to the to-be-located device and the positioning assistance device.

Optionally, the first message and the second message may further include a positioning method (uplink positioning related and/or downlink positioning related).

For example, if the positioning method is a Multi-RTT solution, the to-be-located device and the positioning assistance device only receive a reference signal and send a reference signal.

For example, if the positioning method is a DL-TDoA solution, the positioning assistance device sends a reference signal, and the to-be-located device receives a reference signal.

Optionally, the positioning configuration information may include the reference signal receiving resource or the reference signal sending resource.

In this embodiment of this application, the reference signal receiving resource includes a time domain resource and/or a frequency domain resource for receiving a reference signal, and the reference signal sending resource includes a time domain resource and/or a frequency domain resource for sending a reference signal.

Optionally, the positioning configuration information may include the time domain-related configuration. The time domain-related configuration is used to determine a receiving time period or a sending time period of a reference signal.

In this embodiment of this application, the first identifier, the second identifier, the identifier of the to-be-located device, and an identifier of the positioning assistance device each may be any one of the following: an index (Index), an identity number (ID), address information (for example, an IP address), a port number, a 16-bit random number (random number 16, RN16), an electronic product code (Electronic Product Code, EPC), and the like. The RN16 and the EPC are AIoT-related indexes.

In this embodiment of this application, there are a plurality of positioning assistance devices, there are a plurality of second identifiers, and one second identifier corresponds to one positioning assistance device.

Optionally, the positioning configuration information includes the reference signal receiving resource or the reference signal sending resource. The reference signal receiving resource includes a time domain resource and/or a frequency domain resource for receiving a reference signal. The reference signal sending resource includes a time domain resource and/or a frequency domain resource for sending a reference signal.

The time domain-related configuration includes one or more of the following:
a time domain start position;
a quantity of time periods;
a time period length; and
sequence number-related information of the time period, where duration of the time period is equal to the foregoing segment duration.

The sequence number-related information of the time period may be display and indicated as a time period index, or a time period index determined by using a predefined rule.

The predefined rule may be represented by using a location of the second identifier in the list.

Optionally, the following two forms may represent an implementation of a signaling structure of the first message.

Form 1: first message ::= sequence {
identifier of the to-be-located device enumerated {first identifier},
signal strength information enumerated {db-3, db0, db3, db6}
time domain-related configuration ::= sequence {time domain start position offset INTEGER{ 0..6}, time period length INTEGER{ms3}}
positioning configuration list sequence {size (1...maximum quantity of positioning assistance devices+1)} of positioning configuration
positioning configuration ::= sequence{second identifier or first identifier, positioning configuration information,}
positioning configuration information ::= sequence{
sequence number of the time period INTEGER{ 0..maximum quantity of positioning assistance devices},
reference signal receiving resource,
reference signal sending resource,}}

Form 2: first message ::= sequence{
first identifier,
second identifier list,
signal strength information,
positioning configuration information,
positioning configuration information ::= sequence{
time domain-related configuration (time domain start position, time period length),
reference signal receiving resource,
reference signal sending resource,}}

The second identifier list includes a plurality of second identifiers, and a sequence of the second identifier in the second identifier list indicates a reference signal receiving time period or a reference signal sending time period.

For receiving of a reference signal by the positioning assistance device, the positioning assistance device may determine a plurality of time periods based on the time domain start position and the time period length. Duration of each time period is equal to time period duration.

A target time period is determined from all the time periods based on the sequence of the second identifier of the positioning assistance device in the second identifier list in the plurality of time periods. The target time period is a reference signal receiving time period.

For example, if the sequence of the second identifier in the second identifier list is 5, a time period whose sequence number is 5 in the plurality of time periods is determined as the target time period.

Based on the form 2, a form of the second message may be a form of the following second message 1. The second message 1 is sent to the plurality of positioning assistance devices in a broadcast manner.
second message 1 ::= sequence{
first identifier,
signal strength information,
positioning configuration list sequence{size (1...maximum quantity of positioning assistance devices)} of positioning configuration
positioning configuration information ::= sequence{
second identifier,
time domain-related configuration (sequence number, start position, time period length),
reference signal receiving resource,
reference signal sending resource,}}

The maximum quantity of positioning assistance devices is a quantity of the plurality of positioning assistance devices. The plurality of positioning assistance devices are configured to assist in locating the to-be-located device.

Based on the form 2, a form of the second message may be a form of the following second message 2. The second message 1 is sent to the plurality of positioning assistance devices in a broadcast manner.
second message 2 ::= sequence{
first identifier,
second identifier,
signal strength information,
positioning configuration information ::= sequence{
time domain-related configuration (sequence number, start position, time period length),
reference signal receiving resource,
reference signal sending resource,}}

The following describes signal receiving and sending with reference to some cases of the time domain-related configuration.

(11) The to-be-located device sends a reference signal (or receives a reference signal) based on the first message, and the positioning assistance device receives a reference signal (or sends a reference signal) based on the second message.

The time domain-related configuration in the first message includes a time domain start position, a quantity of segments, and segment duration.

The time domain-related configuration in the second message includes a time domain start position, a quantity of segments, segment duration, and a sequence number of a time period.

The to-be-located device determines a plurality of sending time periods based on the time domain start position, the quantity of segments, and the segment duration, and sends a reference signal (or receives a reference signal) in each sending time period. A quantity of the plurality of sending time periods is equal to the quantity of segments.

The positioning assistance device determines a receiving time period based on the time domain start position, the quantity of segments, the segment duration, and the sequence number of the time period, and receives a reference signal (or sends a reference signal) in the receiving time period.

The second message and the first message may not include the quantity of segments. If the quantity of segments is not included, the quantity of the plurality of sending time periods is equal to a quantity of second identifiers in the first message (or a quantity of second identifiers in the second message).

(12) The to-be-located device sends a reference signal based on the first message, and the positioning assistance device receives a reference signal based on the second message.

The time domain-related configuration in the first message includes a time period list.

The time domain-related configuration in the second message includes a time period list and a sequence number of a time period.

The to-be-located device sends a reference signal (or receives a reference signal) in each time period in the time period list.

The positioning assistance device receives a reference signal (or sends a reference signal) in a time period corresponding to a sequence number of the time period in the time period list.

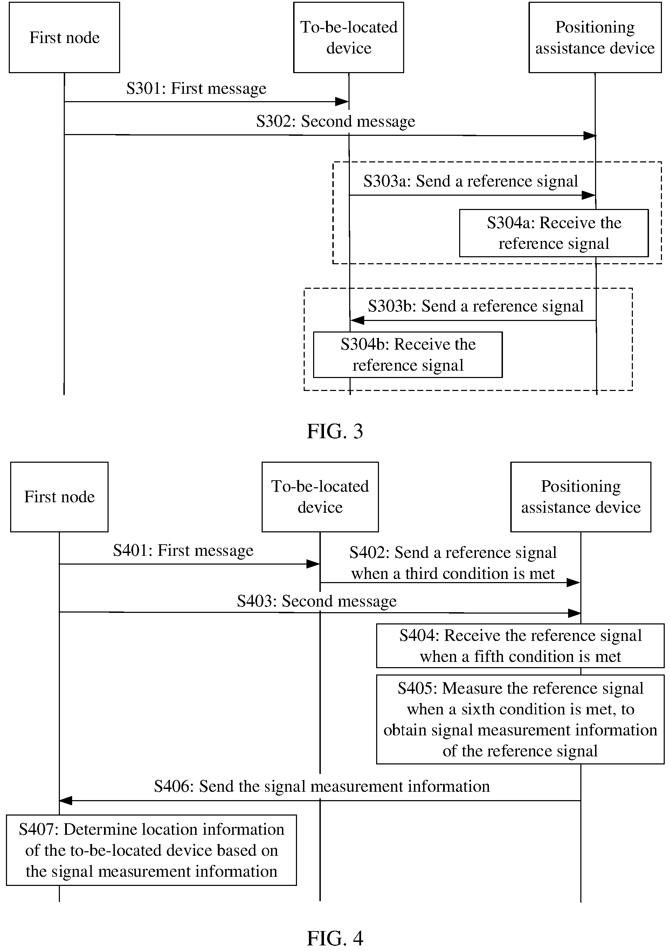

Based on the foregoing embodiment, the following further describes, with reference to FIG. 3, the positioning method provided in the embodiments of this application.

FIG. 3 is a schematic flowchart 2 of a positioning method according to an embodiment of this application. As shown in FIG. 3, the positioning method includes the following steps.

S301: A first node sends a first message to a to-be-located device.

The first message indicates the to-be-located device to send a reference signal or receive a reference signal.

The reference signal is used to determine location information of the to-be-located device.

Optionally, the first message may be an RRC message, a system message, or the like.

S302: The first node sends a second message to a positioning assistance device.

The second message indicates the positioning assistance device to send a reference signal or receive a reference signal.

Optionally, the second message may be an RRC message, a system message, or the like.

In this embodiment of this application, the second message includes one or more of the following:
a second positioning indication, used to indicate to receive a reference signal or send a reference signal;
a first identifier, used to indicate the to-be-located device;
a positioning procedure identifier;
positioning configuration information, including a time domain-related configuration and a reference signal receiving resource or a reference signal sending resource;
a second identifier, used to indicate the positioning assistance device; and
signal strength information, including at least one reference signal strength and/or at least one reference signal strength level.

When the second positioning indication is used to indicate to receive a reference signal, the positioning configuration information includes the reference signal receiving resource.

When the second positioning indication is used to indicate to send a reference signal, the positioning configuration information includes the reference signal sending resource.

A first positioning indication and the second positioning indication are different.

S303a: The to-be-located device sends a reference signal based on the first message.

When the first positioning indication in the first message is used to indicate to send a reference signal, a reference signal is sent to each positioning assistance device based on a reference signal sending resource in the first message.

S304a: The positioning assistance device receives a reference signal based on the second message.

When the second positioning indication in the second message is used to indicate to receive a reference signal, the reference signal sent by each positioning assistance device is received based on the reference signal receiving resource in the second message.

S303b: The positioning assistance device sends a reference signal based on the second message.

When the second positioning indication in the second message is used to indicate to send a reference signal, a reference signal is sent to each positioning assistance device based on the reference signal sending resource in the second message.

S304b: The to-be-located device receives a reference signal based on the first message.

When the first positioning indication in the first message is used to indicate to receive a reference signal, the reference signal sent by each positioning assistance device is received based on a reference signal receiving resource in the first message.

In this application, the to-be-located device may be located by using the method in S303a and S304a, or the to-be-located device may be located by using the method in S303b and S304b. It should be noted that in FIG. 3, only an example of an execution sequence of S301 to S304b is described. This embodiment of this application includes but is not limited to the execution sequence of S301 to S304b in FIG. 3.

Based on the foregoing embodiment, the following describes, with reference to an embodiment in FIG. 4 and by using an example in which the positioning configuration information includes the reference signal receiving resource or the reference signal sending resource, a case in which the to-be-located device is located by using the method in S303a and S304a.

FIG. 4 is a schematic flowchart 3 of a positioning method according to an embodiment of this application. As shown in FIG. 4, the positioning method includes the following steps.

S401: A first node sends a first message to a to-be-located device.

Content included in the first message is the same as content included in the foregoing first message. Details are not described herein.

Optionally, the first node may further record a first correspondence between the second identifier and the to-be-located device.

S402: The to-be-located device sends a reference signal to a positioning assistance device when a third condition is met.

In a possible implementation, the third condition includes one or more of the following:
the first identifier in the first message is the same as an identifier of the to-be-located device;
the first positioning indication in the first message is used to indicate to send a reference signal; and
the positioning configuration information in the first message includes the reference signal sending resource.

In a possible implementation, the reference signal includes one or more of the following:
the identifier of the to-be-located device; and
a positioning procedure identifier.

S403: The first node sends a second message to the positioning assistance device.

Information included in the second message is the same as information included in the second message in S302. Details are not described herein.

S404: The positioning assistance device receives, when a fifth condition is met, the reference signal sent by the to-be-located device.

The fifth condition includes one or more of the following:

The fifth condition includes one or more of the following:
the second identifier in the second message is the same as an identifier of the positioning assistance device;
the second positioning indication in the second message is used to indicate to receive a reference signal; and
the positioning configuration information in the second message includes the reference signal receiving resource.

S405: The positioning assistance device measures the reference signal when a sixth condition is met, to obtain signal measurement information of the reference signal.

In a possible implementation, the sixth condition includes one or more of the following:
the first identifier in the second message is the same as the identifier of the to-be-located device in the reference signal; and
the positioning procedure identifier in the second message is the same as the positioning procedure identifier in the reference signal.

In a possible implementation, the signal measurement information includes one or more of the following:
strength information of the reference signal;
the identifier of the to-be-located device;
the identifier of the positioning assistance device; and
location information of the positioning assistance device.

The following describes the strength information of the reference signal with reference to the signal strength information.

When the signal strength information includes at least one reference signal strength, the strength information of the reference signal may be a reference signal strength closest to an actual measured strength.

The actual measured strength is an actual signal strength obtained after the reference signal is measured.

For example, the at least one reference signal strength includes a, b, and c. If the actual measured strength is closest to b, the strength information of the reference signal may be b.

When the signal strength information includes at least one reference signal strength, or when the signal strength information includes at least one reference signal strength range, the strength information of the reference signal may alternatively be a reference signal strength level within which the actual measured strength falls.

For example, the at least one reference signal strength includes a, b, and c, x ≤ a corresponds to a level 1, a < x ≤ b corresponds to a level 2, and b < x ≤ c corresponds to a level 3, where "level..." indicates a level identifier corresponding to a value range. If the actual measured strength falls within a < x ≤ b, the strength information of the reference signal is the level 2. Herein, x ≤ a, a < x ≤ b, and b < x ≤ c are merely example value ranges. In actual application, a range of an endpoint number in the value range may be adjusted. For example, b < x ≤ c may alternatively be b ≤ x ≤ c.

When the signal strength information includes at least one reference signal strength range (x ≤ a, a < x ≤ b, and b < x ≤ c), if the actual measured strength falls within a < x ≤ b, the strength information of the reference signal is the level 2.

When the signal strength information includes a signal strength offset value a, if the actual strength falls within 0 < x ≤ a, the strength information of the reference signal is the level 1; or if the actual strength falls within a < x ≤ 2a, the strength information of the reference signal is the level 2. S406: The positioning assistance device sends the signal measurement information to the first node.

S407: The first node determines location information of the to-be-located device based on the signal measurement information.

Optionally, the signal measurement information includes the location information of the positioning assistance device. When receiving a plurality of pieces of signal measurement information, the first node determines target measurement information from the plurality of pieces of signal measurement information, and determines the location information of the to-be-located device based on the strength information of the reference signal in the target measurement information and the location information of the positioning assistance device.

Optionally, the signal measurement information does not include the location information of the positioning assistance device. When receiving a plurality of pieces of signal measurement information, the first node determines target measurement information from the plurality of pieces of signal measurement information.

Based on the identifier of the positioning assistance device in the target measurement information, a second preset location corresponding to the identifier is determined from a plurality of second preset locations, and the second preset location corresponding to the identifier is determined as the location information of the positioning assistance device.

The location information of the to-be-located device is determined based on the location information of the positioning assistance device and the strength information of the reference signal in the target measurement information.

Optionally, the target measurement information is signal measurement information in one or more of the following manners 11 to 13.

Manner 11: The target measurement information is signal measurement information including the identifier of the to-be-located device.

Manner 12: The identifier of the positioning assistance device in the target measurement information is the same as the second identifier in the first correspondence.

Manner 13: A positioning procedure identifier in the target measurement information is the same as the positioning procedure identifiers in the first message and the second message.

In this embodiment of this application, the location information of the to-be-located device is determined based on the strength information of the reference signal in the target measurement information, thereby implementing rough estimation of the to-be-located device and allowing an approximate location range of an area in which the to-be-located device is located to be estimated.

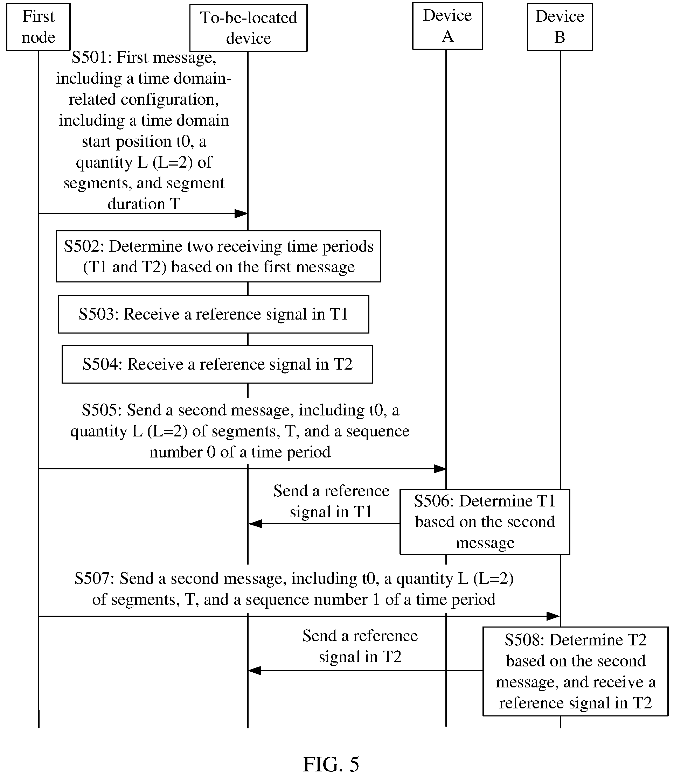

Based on the foregoing embodiment, the following describes the method in S401 to S404 with reference to an embodiment in FIG. 5 and an example in which the positioning configuration information includes the time domain-related configuration. Therefore, in FIG. 5, in descriptions of receiving and sending of a reference signal, a quantity of positioning assistance devices is 2. It should be noted that usually, at least three positioning assistance devices are required to locate a to-be-located device.

FIG. 5 is a schematic flowchart of receiving and sending a reference signal according to an embodiment of this application. As shown in FIG. 5, the positioning method includes the following steps.

S501: A first node sends a first message to a to-be-located device, where a time domain-related configuration in the first message includes a time domain start position t0, a quantity L (L=2) of segments, and segment duration T.

Herein, L is equal to a quantity of positioning assistance devices.

S502: The to-be-located device determines two receiving time periods (T1 and T2) based on the first message.

A start moment of T1 is equal to t0, and duration is equal to T. A start moment of T2 is equal to an end moment of T1, and duration is equal to T.

S503: The to-be-located device receives a reference signal in T1.

Optionally, the to-be-located device sends and receives a reference signal in T1 when a first condition is met.

S504: The to-be-located device receives a reference signal in T2.

Optionally, the to-be-located device receives a reference signal in T1 when the first condition is met.

S505: The first node sends a second message to a positioning assistance device (a device A), where a time domain-related configuration in the second message includes t0, a quantity L (L=2) of segments, segment duration T, and a sequence number (for example, 0) of a time period.

S506: The device A determines a sending time period (for example, T1) based on the second message, and sends a reference signal in T1.

Specifically, the device A determines two time periods based on t0, the quantity L (L=2) of segments, and the segment duration T; and determines a time period corresponding to the sequence number 0 in the plurality of time periods as a time period.

The plurality of time periods have corresponding sequence numbers.

Specifically, the determining a time period corresponding to the sequence number 0 in the plurality of time periods as a sending time period includes:
based on a time sequence of the plurality of time periods, sequentially configuring a corresponding sequence number for each time period starting from the sequence number 0, and determining a time period for which the sequence number 0 is configured as a sending time period.

Specifically, the device A sends a reference signal when a fourth condition is met.

S507: The first node sends a second message to a positioning assistance device (a device B), where a time domain-related configuration in the second message includes t0, a quantity L (L=2) of segments, segment duration T, and a sequence number (for example, 1) of a time period.

S508: The device B determines a sending time period (for example, T2) based on the second message, and sends a reference signal in T2.

Specifically, an execution method of S507 and S08 is the same as an execution method of S505 and S506, and an execution process of S507 and S08 is not described herein.

In this embodiment of this application, the positioning assistance device sends a reference signal in different sending time periods, and the to-be-located device receives a reference signal in different time periods. This can improve quality of the received reference signal, thereby improving accuracy of obtaining location information of the to-be-located device.

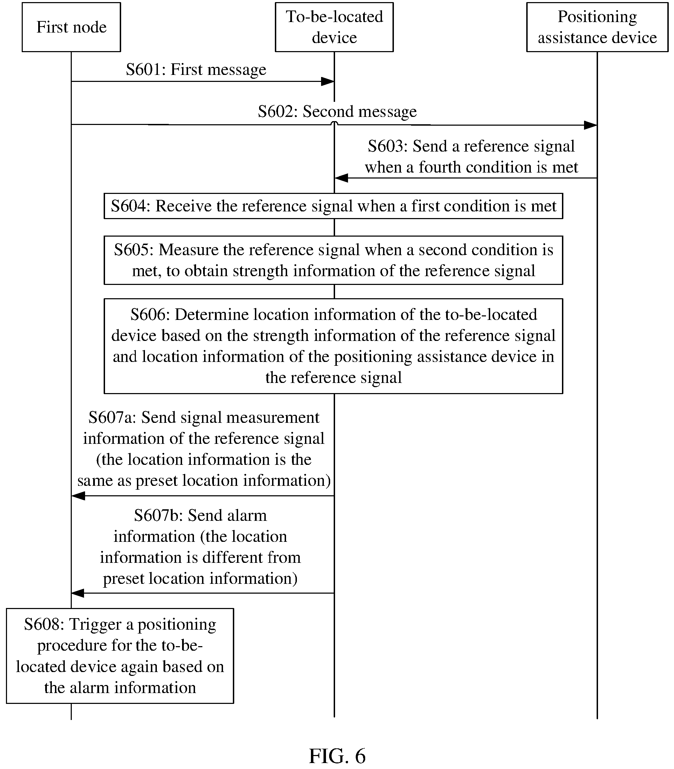

Based on the foregoing embodiment, the following describes, with reference to an embodiment in FIG. 6 and by using an example in which the positioning configuration information includes the reference signal receiving resource or the reference signal sending resource, a case in which the to-be-located device is located by using the method in S303b and S304b.

FIG. 6 is a schematic flowchart 4 of a positioning method according to an embodiment of this application. As shown in FIG. 6, the positioning method includes the following steps.

S601: A first node sends a first message to a to-be-located device.

S602: The first node sends a second message to a positioning assistance device.

S603: The positioning assistance device sends a reference signal to the to-be-located device when a fourth condition is met.

In a possible implementation, the fourth condition includes one or more of the following:
a second identifier in the second message is the same as an identifier of the positioning assistance device;
a second positioning indication in the second message is used to indicate to send a reference signal; and
positioning configuration information in the second message includes a reference signal sending resource.

In a possible implementation, the reference signal includes one or more of the following:
the identifier of the positioning assistance device;
location information of the positioning assistance device; and
a positioning procedure identifier.

In this embodiment of this application, the location information of the positioning assistance device may be absolute location information, virtual location information, predefined location information, or the like.

S604: The to-be-located device receives, when a first condition is met, the reference signal sent by the positioning assistance device.

In a possible implementation, the first condition includes one or more of the following:
a first identifier in the first message is the same as an identifier of the to-be-located device;
a first positioning indication in the first message is used to indicate to receive a reference signal; and
positioning configuration information in the first message includes a reference signal receiving resource.

S605: The to-be-located device measures the reference signal when a second condition is met, to obtain strength information of the reference signal.

The second condition includes one or more of the following:
the second identifier is the same as the identifier of the positioning assistance device; and
a positioning procedure identifier in the first message is the same as the positioning procedure identifier in the reference signal.

The strength information of the reference signal in S605 is similar to the strength information of the reference signal in S405. Details are not described herein.

It should be noted that when there are a plurality of positioning assistance devices, strength information of a plurality of reference signals and location information of a plurality of positioning assistance devices are obtained after S604 and S605 are performed.

S606: The to-be-located device determines location information of the to-be-located device based on the strength information of the reference signal and the location information of the positioning assistance device in the reference signal.

Further, the location information of the to-be-located device is determined based on the strength information of the plurality of reference signals and the location information of the plurality of positioning assistance devices.

In this embodiment of this application, the reference signal includes the identifier of the positioning assistance device, so that the to-be-located device can determine an association relationship between the reference signal and the positioning assistance device, to ensure that the to-be-located device can determine the location information of the to-be-located device.

S607a: The to-be-located device sends signal measurement information of the reference signal to the first node when the location information is the same as first preset location information of the to-be-located device.

The first preset location information is location information pre-stored in the to-be-located device.

In a possible embodiment, the signal measurement information includes one or more of the following:
the strength information of the reference signal; and
the identifier of the positioning assistance device.

Optionally, when the location information is the same as the first preset location information of the to-be-located device, the to-be-located device may alternatively not send the signal measurement information of the reference signal to the first node.

Optionally, when the location information is the same as the first preset location information of the to-be-located device, the identifier of the positioning assistance device may be separately sent to the first node. The identifier of the positioning assistance device is an identifier of a positioning device that sends the reference signal.

S607b: The to-be-located device sends alarm information to the first node when the location information of the to-be-located device is different from first preset location information of the to-be-located device, where the alarm information includes the location information of the to-be-located device and/or the identifier of the to-be-located device.

S608: The first node triggers a positioning procedure for the to-be-located device again based on the alarm information.

Optionally, the positioning procedure triggered again for the to-be-located device may differ from S601 to S608 in that there is a different positioning procedure identifier, there may be a different second identifier, and there is different positioning configuration information, and is similar to S601 to S608 in that there is a same first identifier.

Optionally, the positioning procedure triggered again for the to-be-located device may be a positioning procedure with higher precision.

In this embodiment of this application, it is determined, based on the alarm information, whether the to-be-located device moves, to trigger a positioning procedure for the to-be-located device, thereby improving reliability of locating the to-be-located device.

In the foregoing embodiment, a signal in an AIoT communication system is relatively weak. Therefore, the to-be-located device is located by using the positioning assistance device, to achieve an objective of locating the to-be-located device in the AIoT communication system.

In addition, in the foregoing embodiment, considering that it is difficult for the positioning assistance device and the to-be-located device to establish a direct communication link, it is identified, by using a positioning procedure index, whether a message or a reference signal is related to the positioning assistance device and the to-be-located device, thereby reducing signaling overheads.

Based on FIG. 6, when the positioning configuration information includes the time domain-related configuration, an execution process in S601 to S604 is similar to an execution process in the embodiment in FIG. 5. Details are not described herein. When the positioning configuration information includes the time domain-related configuration, there is an execution process in S601 to S604.

The positioning method in the embodiments of this application is described above. An apparatus for performing the method provided in an embodiment of this application is described below. A person skilled in the art may understand that the method and the apparatus may be combined and mutual reference may be made, and that a related apparatus provided in an embodiment of this application may perform the steps in the foregoing list ranking method. It should be noted that all module names in the embodiments of this application may be defined as other names, provided that functions of the modules can be implemented. The module names are not specifically limited.

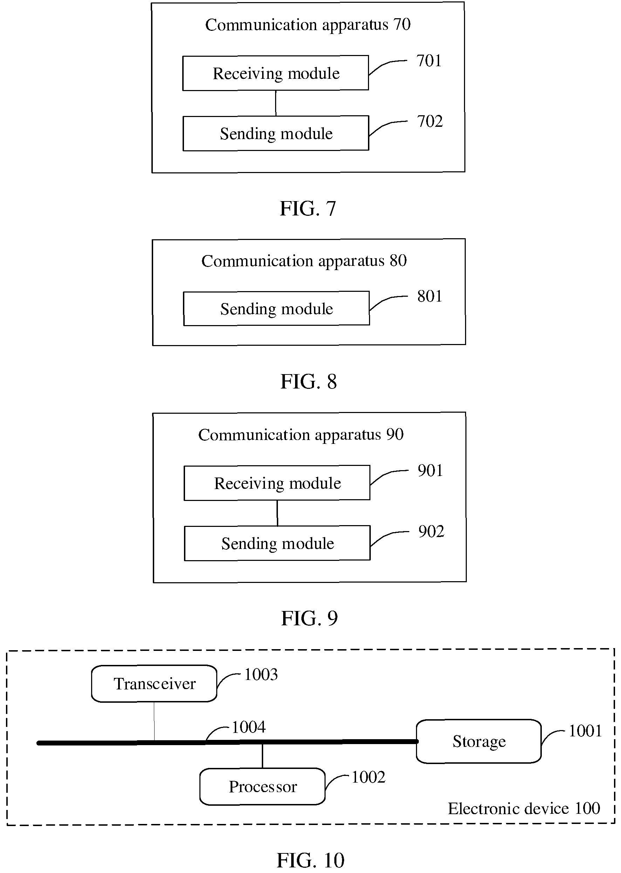

FIG. 7 is a schematic diagram 1 of a structure of a communication apparatus according to an embodiment of this application. The communication apparatus 70 is applied to a to-be-located device. As shown in FIG. 7, the communication apparatus 70 includes:
a receiving module 701, configured to receive a first message sent by a first node.

The receiving module 701 is further configured to receive a reference signal based on the first message. Alternatively, a sending module 702 is configured to send a reference signal. The reference signal is used to determine location information of the to-be-located device.

The communication apparatus provided in this embodiment may perform the method steps performed by the to-be-located device in the foregoing method embodiments. Implementation principles and beneficial effects of the communication apparatus are similar. Details are not described herein.

In a possible implementation, the first message includes one or more of the following:
a first positioning indication, used to indicate to receive a reference signal or send a reference signal;
a first identifier, used to indicate the to-be-located device;
a positioning procedure identifier;
positioning configuration information, including a time domain-related configuration and a reference signal receiving resource or a reference signal sending resource;
a second identifier, used to indicate a positioning assistance device; and
signal strength information, including at least one reference signal strength and/or at least one reference signal strength level.

In a possible implementation, the receiving module 701 is specifically configured to:
receive, when a first condition is met, a reference signal sent by the positioning assistance device.

The first condition includes one or more of the following:
the first identifier is the same as an identifier of the to-be-located device;
the first positioning indication is used to indicate to receive a reference signal; and
the positioning configuration information includes the reference signal receiving resource.

In a possible implementation, the reference signal includes one or more of the following:
an identifier of the positioning assistance device that sends the reference signal;
location information of the positioning assistance device; and
a positioning procedure identifier.

In a possible implementation, the communication apparatus further includes:
a processing module, configured to measure the reference signal when a second condition is met, to obtain strength information of the reference signal.

The second condition includes one or more of the following:
the second identifier is the same as the identifier of the positioning assistance device; and
the positioning procedure identifier in the first message is the same as the positioning procedure identifier in the reference signal.

In a possible implementation, the processing module is further configured to:
determine the location information of the to-be-located device based on the strength information of the reference signal and the location information of the positioning assistance device.

In a possible implementation, the sending module 702 is further configured to:
send alarm information to the first node when the location information of the to-be-located device is different from first preset location information of the to-be-located device, where the alarm information includes the location information of the to-be-located device and/or the identifier of the to-be-located device.

In a possible implementation, the sending module 702 is further configured to:
send signal measurement information of the reference signal to the first node.

The signal measurement information includes one or more of the following:
the strength information of the reference signal; and
the identifier of the positioning assistance device.

In a possible implementation, the sending module 702 is further configured to:
send a reference signal to the positioning assistance device when a third condition is met.

The third condition includes one or more of the following:
the first identifier is the same as an identifier of the to-be-located device;
the first positioning indication is used to indicate to send a reference signal; and
the positioning configuration information includes the reference signal sending resource.

In a possible implementation, the reference signal includes one or more of the following:
the identifier of the to-be-located device; and
a positioning procedure identifier.

The communication apparatus provided in this embodiment may perform the method steps performed by the to-be-located device in the foregoing method embodiments. Implementation principles and beneficial effects of the communication apparatus are similar. Details are not described herein.

FIG. 8 is a schematic diagram 2 of a structure of a communication apparatus according to an embodiment of this application. The communication apparatus 80 is applied to a first node. As shown in FIG. 8, the communication apparatus 80 includes:
a sending module 801, configured to: send a first message to a to-be-located device, and send a second message to a positioning assistance device.

The communication apparatus provided in this embodiment may perform the method steps performed by the first node in the foregoing method embodiments. Implementation principles and beneficial effects of the communication apparatus are similar. Details are not described herein.

In a possible implementation, the second message includes one or more of the following:
a second positioning indication, used to indicate to receive a reference signal or send a reference signal;
a first identifier, used to indicate the to-be-located device;
a positioning procedure identifier;
positioning configuration information, including a time domain-related configuration and a reference signal receiving resource or a reference signal sending resource;
a second identifier, used to indicate the positioning assistance device; and
signal strength information, including at least one reference signal strength and/or at least one reference signal strength level.

In a possible implementation, the communication apparatus further includes:
a receiving module, configured to receive alarm information sent by the to-be-located device, where the alarm information includes location information of the to-be-located device and/or an identifier of the to-be-located device.

In a possible implementation, the alarm information is used to trigger re-location of the to-be-located device.

In a possible implementation, the receiving module is further configured to:
receive signal measurement information sent by the to-be-located device.

The signal measurement information includes one or more of the following:
strength information of a reference signal, where the reference signal is a reference signal sent by the positioning assistance device; and
an identifier of the positioning assistance device.

In a possible implementation, the method further includes a processing module.

The receiving module is further configured to receive signal measurement information sent by the positioning assistance device.

The processing module is configured to determine location information of the to-be-located device based on the signal measurement information.

The signal measurement information includes one or more of the following:
strength information of a reference signal, where the reference signal is a reference signal sent by the to-be-located device;
an identifier of the to-be-located device; and
an identifier of the positioning assistance device.

The communication apparatus provided in this embodiment may perform the method steps performed by the first node in the foregoing method embodiments. Implementation principles and beneficial effects of the communication apparatus are similar. Details are not described herein.

FIG. 9 is a schematic diagram 3 of a structure of a communication apparatus according to an embodiment of this application. The communication apparatus 90 is applied to a positioning assistance device. As shown in FIG. 9, the communication apparatus 90 includes:
a receiving module 901, configured to receive a second message sent by a first node.

The receiving module 901 is further configured to receive a reference signal based on the second message. Alternatively, a sending module 902 is configured to send a reference signal based on the second message. The reference signal is used to determine location information of a to-be-located device.

The communication apparatus provided in this embodiment may perform the method steps performed by the positioning assistance device in the foregoing method embodiments. Implementation principles and beneficial effects of the communication apparatus are similar. Details are not described herein.

In a possible implementation, the second message includes one or more of the following:
a second positioning indication, used to indicate to receive a reference signal or send a reference signal;
a first identifier, used to indicate the to-be-located device;
a positioning procedure identifier;
positioning configuration information, including a time domain-related configuration and a reference signal receiving resource or a reference signal sending resource;
a second identifier, used to indicate the positioning assistance device; and
signal strength information, including at least one signal strength and/or at least one signal strength level of a reference signal.

In a possible implementation, the sending module 902 is specifically configured to:
send a reference signal to the to-be-located device when a fourth condition is met.

The fourth condition includes one or more of the following:
the second identifier is the same as an identifier of the positioning assistance device;
the second positioning indication is used to indicate to send a reference signal; and
the positioning configuration information includes the reference signal sending resource.

In a possible implementation, the reference signal includes one or more of the following:
the identifier of the positioning assistance device;
location information of the positioning assistance device; and
a positioning procedure identifier.

In a possible implementation, the receiving module 901 is specifically configured to:
receive, when a fifth condition is met, a reference signal sent by the to-be-located device.

The fifth condition includes one or more of the following:
the second identifier is the same as an identifier of the positioning assistance device;
the second positioning indication is used to indicate to receive a reference signal; and
the positioning configuration information includes the reference signal receiving resource.

In a possible implementation, the reference signal includes one or more of the following:
an identifier of the to-be-located device; and
a positioning procedure identifier.

In a possible implementation, the communication apparatus further includes:
a processing module, configured to measure the reference signal when a sixth condition is met, to obtain signal measurement information of the reference signal.

The sending module 902 is further configured to send the signal measurement information to the first node.

The sixth condition includes one or more of the following:
the first identifier is the same as the identifier of the to-be-located device; and
the positioning procedure identifier in the second message is the same as the positioning procedure identifier in the reference signal.

The signal measurement information includes one or more of the following:
strength information of the reference signal;
the identifier of the to-be-located device; and
the identifier of the positioning assistance device.

The communication apparatus provided in this embodiment may perform the method steps performed by the positioning assistance device in the foregoing method embodiments. Implementation principles and beneficial effects of the communication apparatus are similar. Details are not described herein.

FIG. 10 is a schematic diagram of a structure of an electronic device according to an embodiment of this application. As shown in FIG. 10, the electronic device 100 may include a storage 1001, a processor 1002, and a transceiver 1003. The transceiver 1003 may include a transmitter and/or a receiver. The transmitter may also be referred to as a similar description such as a sender, a transmitter machine, a sending port, or a sending interface. The receiver may also be referred to as a similar description such as a receiver machine, a receiving port, or a receiving interface. For example, the storage 1001, the processor 1002, and the transceiver 1003 are connected to each other through a bus 1004.

The storage 1001 is configured to store program instructions.

The processor 1002 is configured to execute the program instructions stored in the storage, to enable the electronic device to perform the method steps performed by one or more of the to-be-located device, the positioning assistance device, and the first node in the foregoing method embodiments. Implementation principles and technical effects of the electronic device are similar to those in the foregoing related embodiments. Details are not described herein.

An embodiment of this application provides a chip. The chip includes a processor. The processor is configured to invoke a computer program in a storage, to perform the method steps performed by one or more of the to-be-located device, the positioning assistance device, and the first node in the foregoing method embodiments. Implementation principles and technical effects of the chip are similar to those in the foregoing related embodiments. Details are not described herein.

An embodiment of this application provides a chip system, including at least one processor and a communication interface. The communication interface and the at least one processor are interconnected through a line. The at least one processor is configured to run a computer program or instructions, to perform the method steps performed by one or more of the to-be-located device, the positioning assistance device, and the first node in the foregoing method embodiments. Implementation principles and technical effects of the chip system are similar to those in the foregoing related embodiments. Details are not described herein.

An embodiment of this application further provides a computer-readable storage medium. The computer-readable storage medium stores a computer program. When the computer program is executed by a processor, the method steps performed by one or more of the to-be-located device, the positioning assistance device, and the first node in the foregoing method embodiments are implemented. All or some of the methods described in the foregoing embodiments may be implemented by using software, hardware, firmware, or any combination thereof. If the methods are implemented in software, a function may be stored on a computer-readable medium as one or more instructions or code or transmitted on a computer-readable medium. The computer-readable medium may include a computer storage medium and communication medium, and may also include any medium that can transfer a computer program from one place to another. The storage medium may be any target medium accessible by a computer.

In a possible implementation, the computer-readable medium may include a RAM, a ROM, a compact disc read-only memory (compact disc read-only memory, CD-ROM) or another optical disc storage, a magnetic disk storage or another magnetic storage device, or any other medium that is intended to carry or store required program code in a form of instructions or a data structure and that is accessible by a computer. In addition, any connection is appropriately referred to as a computer-readable medium. For example, if software is transmitted from a website, a server, or another remote source by using a coaxial cable, an optical fiber cable, a twisted pair, a digital subscriber line (Digital Subscriber Line, DSL), or wireless technologies (for example, infrared, radio, and microwave), the coaxial cable, the optical fiber cable, the twisted pair, the DSL, or the wireless technologies such as infrared, radio, and microwave are included in the definition of the medium. As used in this specification, a magnetic disk and an optical disc include a compact disc, a laser disc, an optical disc, a digital versatile disc (Digital Versatile Disc, DVD), a floppy disk, and a Blu-ray disc. The magnetic disk usually reproduces data magnetically, while the optical disc reproduces data optically by using a laser. The foregoing combinations should also be included in the scope of the computer-readable medium.

An embodiment of this application provides a computer program product. The computer program product includes a computer program. When the computer program is run, a computer is enabled to perform the method steps performed by one or more of the to-be-located device, the positioning assistance device, and the first node in the foregoing method embodiments. Implementation principles and technical effects of the computer program product are similar to those in the foregoing related embodiments. Details are not described herein.

The embodiments of this application are described with reference to the flowcharts and/or block diagrams of the method, the device (system), and the computer program product according to the embodiments of this application. It should be understood that each procedure and/or block in the flowcharts and/or the block diagrams and a combination of procedures and/or blocks in the flowcharts and/or the block diagrams may be implemented by using computer program instructions. These computer program instructions may be provided to a general-purpose computer, a special-purpose computer, an embedded processor, or a processing unit of another programmable device to generate a machine, so that the instructions executed by the computer or the processing unit of the another programmable data processing device generate an apparatus for implementing a specific function in one or more procedures in the flowcharts and/or in one or more blocks in the block diagrams.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, improvement, and the like made based on the technical solutions of the present invention shall fall within the protection scope of the present invention.

## Claims

1. A positioning method, applied to a to-be-located device, wherein the method comprises:
receiving a first message sent by a first node; and
receiving a reference signal or sending a reference signal based on the first message, wherein the reference signal is used to determine location information of the to-be-located device.

2. The method according to claim 1, wherein the first message comprises one or more of the following:
a first positioning indication;
a first identifier, used to indicate the to-be-located device;
a positioning procedure identifier;
positioning configuration information, comprising a time domain-related configuration and a reference signal receiving resource or a reference signal sending resource;
a second identifier, used to indicate a positioning assistance device; and
signal strength information, comprising at least one reference signal strength and/or at least one reference signal strength level.

3. The method according to claim 2, wherein the receiving a reference signal comprises:
receiving, when a first condition is met, a reference signal sent by the positioning assistance device, wherein
the first condition comprises one or more of the following:
the first identifier is the same as an identifier of the to-be-located device;
the first positioning indication is used to indicate to receive a reference signal; and
the positioning configuration information comprises the reference signal receiving resource.

4. The method according to claim 3, wherein the reference signal comprises one or more of the following:
an identifier of the positioning assistance device that sends the reference signal;
location information of the positioning assistance device; and
a positioning procedure identifier.

5. The method according to claim 4, wherein the method further comprises:
measuring the reference signal when a second condition is met, to obtain strength information of the reference signal, wherein
the second condition comprises one or more of the following:
the second identifier is the same as the identifier of the positioning assistance device; and
the positioning procedure identifier in the first message is the same as the positioning procedure identifier in the reference signal.

6. The method according to claim 5, wherein the method further comprises:
determining the location information of the to-be-located device based on the strength information of the reference signal and the location information of the positioning assistance device.

7. The method according to claim 6, wherein the method further comprises:
sending alarm information to the first node when the location information of the to-be-located device is different from first preset location information of the to-be-located device, wherein the alarm information comprises the location information of the to-be-located device and/or the identifier of the to-be-located device.

8. The method according to claim 6 or 7, wherein the method further comprises:
sending signal measurement information of the reference signal to the first node, wherein
the signal measurement information comprises one or more of the following:
the strength information of the reference signal; and
the identifier of the positioning assistance device.

9. The method according to claim 2, wherein the sending a reference signal comprises:
sending a reference signal to the positioning assistance device when a third condition is met, wherein
the third condition comprises one or more of the following:
the first identifier is the same as an identifier of the to-be-located device;
the first positioning indication is used to indicate to send a reference signal; and
the positioning configuration information comprises the reference signal sending resource.

10. The method according to claim 9, wherein the reference signal comprises one or more of the following:
the identifier of the to-be-located device; and
a positioning procedure identifier.

11. A positioning method, applied to a first node, wherein the method comprises:
sending a first message to a to-be-located device, and sending a second message to a positioning assistance device.

12. The method according to claim 11, wherein the second message comprises one or more of the following:
a second positioning indication, used to indicate to receive a reference signal and/or send a reference signal;
a first identifier, used to indicate the to-be-located device;
a positioning procedure identifier;
positioning configuration information, comprising a time domain-related configuration and a reference signal receiving resource or a reference signal sending resource;
a second identifier, used to indicate the positioning assistance device; and
signal strength information, comprising at least one reference signal strength and/or at least one reference signal strength level.

13. The method according to claim 11 or 12, wherein the method further comprises:
receiving alarm information sent by the to-be-located device, wherein the alarm information comprises location information of the to-be-located device and/or an identifier of the to-be-located device.

14. The method according to claim 13, wherein the alarm information is used to trigger re-location of the to-be-located device.

15. The method according to any one of claims 11 to 14, wherein the method further comprises:
receiving signal measurement information sent by the to-be-located device, wherein
the signal measurement information comprises one or more of the following:
strength information of a reference signal, wherein the reference signal is a reference signal sent by the positioning assistance device; and
an identifier of the positioning assistance device.

16. The method according to claim 11 or 12, wherein the method further comprises:
receiving signal measurement information sent by the positioning assistance device, and determining location information of the to-be-located device based on the signal measurement information, wherein
the signal measurement information comprises one or more of the following:
strength information of a reference signal, wherein the reference signal is a reference signal sent by the to-be-located device;
an identifier of the to-be-located device; and
an identifier of the positioning assistance device.

17. A positioning method, applied to a positioning assistance device, wherein the method comprises:
receiving a second message sent by a first node; and
receiving a reference signal or sending a reference signal based on the second message, wherein the reference signal is used to determine location information of a to-be-located device.

18. The method according to claim 17, wherein the second message comprises one or more of the following:
a second positioning indication, used to indicate to receive a reference signal or send a reference signal;
a first identifier, used to indicate the to-be-located device;
a positioning procedure identifier;
positioning configuration information, comprising a time domain-related configuration and a reference signal receiving resource or a reference signal sending resource;
a second identifier, used to indicate the positioning assistance device; and
signal strength information, comprising at least one signal strength and/or at least one signal strength level of a reference signal.

19. The method according to claim 18, wherein the sending a reference signal comprises:
sending a reference signal to the to-be-located device when a fourth condition is met, wherein
the fourth condition comprises one or more of the following:
the second identifier is the same as an identifier of the positioning assistance device;
the second positioning indication is used to indicate to send a reference signal; and
the positioning configuration information comprises the reference signal sending resource.

20. The method according to claim 19, wherein the reference signal comprises one or more of the following:
the identifier of the positioning assistance device;
location information of the positioning assistance device; and
a positioning procedure identifier.

21. The method according to claim 18, wherein the receiving a reference signal comprises:
receiving, when a fifth condition is met, a reference signal sent by the to-be-located device, wherein
the fifth condition comprises one or more of the following:
the second identifier is the same as an identifier of the positioning assistance device;
the second positioning indication is used to indicate to receive a reference signal; and
the positioning configuration information comprises the reference signal receiving resource.

22. The method according to claim 21, wherein the reference signal comprises one or more of the following:
an identifier of the to-be-located device; and
a positioning procedure identifier.

23. The method according to claim 22, wherein the method further comprises:
measuring the reference signal when a sixth condition is met, to obtain signal measurement information of the reference signal, and sending the signal measurement information to the first node, wherein
the sixth condition comprises one or more of the following:
the first identifier is the same as the identifier of the to-be-located device; and
the positioning procedure identifier in the second message is the same as the positioning procedure identifier in the reference signal; and
the signal measurement information comprises one or more of the following:
strength information of the reference signal;
the identifier of the to-be-located device; and
the identifier of the positioning assistance device.

24. An electronic device, comprising a processor and a storage, wherein
the storage stores computer-executable instructions; and
the processor executes the computer-executable instructions stored in the storage, to enable the electronic device to perform the method according to any one of claims 1 to 23.

25. A computer-readable storage medium, wherein the computer-readable storage medium stores a computer program, and when the computer program is executed by a processor, the method according to any one of claims 1 to 23 is implemented.

26. A chip system, comprising at least one processor and a communication interface, wherein the communication interface and the at least one processor are interconnected through a line, and the at least one processor is configured to run a computer program or instructions, to perform the method according to any one of claims 1 to 23.

27. A computer program product, comprising a computer program, wherein when the computer program is run, a computer is enabled to perform the method according to any one of claims 1 to 23.
